# EUROPEAN PATENT SPECIFICATION

(11) **EP 1 486 151 B1**
(45) Date of publication and mention of the grant of the patent: **13.09.2006**
(21) Application number: 04013385.2
(22) Date of filing: 07.06.2004
(51) Int. Cl.: A47J 37/06

(54) **Cooking plane provided with electric resistances immersed in a diathermic fluid**
Kochplatte mit in einer diathermischen Flüssigkeit eingetauchten elektrischen Widerständen
Plaque électrique équipée de résistances électriques immergées dans un fluide diathermique

(30) Priority: 12.06.2003 IT VR20030024
(43) Date of publication of application: 15.12.2004
(73) Proprietor: Simeoni Michela, 37026 Settimo Di Pescantina (Verona) (IT)
(72) Inventor: Simeoni Michela, 37026 Settimo Di Pescantina (Verona) (IT)
(74) Representative: Savi, Alberto

(56) References cited:
- EP-A- 0 908 129
- US-A- 3 815 575
- US-A- 3 968 787
- US-B1- 6 320 166

## Description

The present invention refers to a cooking plate. The main feature of this cooking plate consists in that the heat is generated by electric resistances immersed in a bath of diathermic oil. The electric resistances heat, in a perfectly uniform way, the cooking plate on which the food to be cooked is arranged.

The present invention is very advantageous in comparison with the known solutions because it permits to obtain a great saving in the consumption of electricity as well as a better cooking of the food. The said advantages and aims are reached thorugh a cooking system that permits to maintain a balanced, homogeneous temperature in the whole cooking plane.

As is known, in the field of kitchens, restaurants and catering in general, the food cooking processes are getting more and more accurate and appropriate in order to make the food easily digestible and to facilitate the absorption of the nourishing substances.

Most apparatuses utilized in the catering consist of either a cooking unit provided with a burner or a cooking unit provided with electric resistances such as warming plates, ovens, grills or other similar devices.

However, there are many problems in a flame heating system as well as in a heating system that utilizes electric resistances because the cooking of food is not uniform in such systems and it may occur that a part of the food is not cooked or well-cooked while another part of the same food is cooked too much and risks burning.

In addition, the consumption and cost may be very high in the said systems. The flame or electric resistance touches the cooking plate directly and therefore, there is a direct contact between the gas flame or electric resistance and the cooking plate, which causes the said problems in the food cooking and does not save the nutritious and protective values of the food that are indispensable to the health. In addition, the high temperatures generate substances such as aromatic heterocyclic amines that are very prejudicial to the health.

As far as the solution of some of the preceding described problems, a particular griddle is known from document EP 0908129. Said griddle shows a cooking medium chamber which contains a heating medium in the form of water. Said water, which is heated, transforms itself into steam that heats the top cooking surface in a more homogeneous way.

However said cooking system presents several disadvantages, among which the most relevant one is that it requires a very high quantity of energy and longer cooking time.

From US 6320166 it is also known the use of different heating medium such as silicon oil which is placed in a cavity positioned between an inner shell and an outer shell of a cooking apparatus such as a container. The silicon oil, heated in the cavity by heating elements, heats the inner shell and cooks the food in the container.

Said apparatus presents several problems: for example tha cavity is not completely fill, causing the presence of expanding heated air with obvious safety problems. Besides said container can be shaped as a pot, and, as a consequence, it can contain only small amount of food.

The aim of the present invention is to carry out a conceptually new cooking system which overcomes the previous disadvantages. In said new cooking system the electric resistances do not touch the cooking plate directly since they are immersed in a diathermic fluid, which optimizes the cooking process.

The new system offers the following important practical advantages:
a) a very reduced consumption of electric energy, in practice the consumption of electric energy is reduced to about a half;
b) a rapid reaching of the cooking temperature;
c) a perfectly balanced, homogeneous cooking temperature of the cooking plate;
d) the balanced temperature of the cooking plate never burns the aliments, even if delicate foodstuffs are concerned such as vegetables, fish, white meat and beef though it is possible to select the wished cooking temperature;
e) the particular shape of the cooking plate according to the present invention is the result of several tests and is to avoid any breakage in the soldering points during the expansion phase of the diathermic oil.

The present cooking plane is the top of an advanced technology and is very practical and functional and meets the requirements for a professional operative utilization and reduces both the cooking cost and upkeep cost.

The technical knowledge applied to several industrial sectors, in particular the sector of the great industrial cooking plants, has permitted to carry out the present cooking system by utilizing a diathemic oil as a heat conductor.

The advantages of the present cooking system are very important. Above all, there is the advantage of a high energetic output that exceed 60%. As a matter of fact, the quantity of electric energy utilized to heat the present cooking plane is a half of the quantity of energy utilized in the known cooking devices.

Besides, there is no loss of heat because the heating electric resistances are made of stainless steel and do not work in the air but they are immersed in a diathermic fluid in the inside of a hermetically sealed chamber. The diathermic fluid acts as a conductor and takes advantage of all the calories generated by the electric resistances so as to obtain a "Fry Tops" with a cooking plate that is heated indirectly.

The heating diathermic body permits to reach a perfectly balanced temperature in the cooking plane and keeps the temperature uniform like a fly-wheel, which permits the operator to obtain the highest output from the present cooking plane. The operator can always set the wished cooking temperature through a thermostatic control that is provided in the cooking plane.

All the above indicated aims and advantages are reached according to the present invention through a food cooking plane comprising both a heated cooking plate on which the food to be cooked is arranged and electric resistances, characterized in that the said electric resistances are immersed in a bath of diathermic fluid which laps on the whole lower side of the cooking plate, and that the said cooking plate is heated by the said diathermic fluid which diffuses and propagates homogeneously the heat generated by the electric resistances.

Further features and details of this invention will be better understood from the following specification which is provided as a non-restricting example on the hand of the accompanying drawing wherein:
Fig. 1 is a schematic perspective view of a cooking plane according to the present invention on the whole; and
Fig. 2 is a schematic lateral view of the cooking plane of Fig. 1.

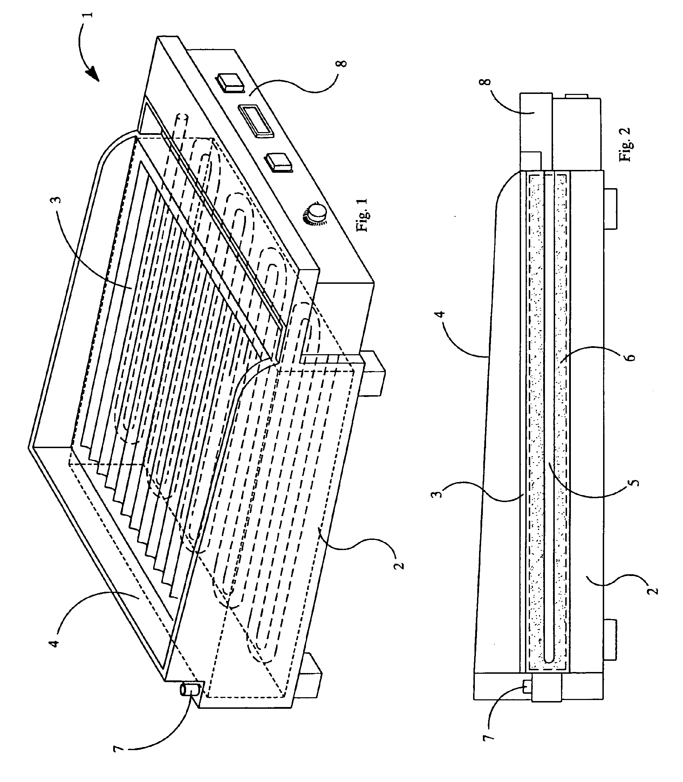

With reference to the accompanying drawing, number 1 denotes a cooking plane on the whole for the cooking or warming of various aliments such as vegetables, white meat, beef, fish, etc. The food to be cooked may be arranged on the cooking plane directly, otherwise the aliments may be placed in appropriate pots or casseroles which are then put on the cooking plane.

Basically, the cooking plane 1 is provided with a frame or body 2 which is the base and support of the present structure. A cooking plate 3 is disposed in the upper part of the structure. The cooking plate 3 shows an essentially flat shape but it may be particularly shaped with undulations, ribs or other type of reliefs.

The cooking plate 3 is contained in a projecting shoulder 4 which surrounds the cooking plate 3 but the front side of the cooking plate 3 remains free to permit the aliments to be put on the plate and taken out once they are cooked.

As said, the peculiarity of the present cooking plane consists in a particular kind of heating that takes advantage of conventional electric resistances 5 made of stainless steel or the like. The said electric resistances 5 do not propagate heat to the lower side of the cooking plate directly but they are immersed in a bath of diathermic fluid. More precisely, the electric resistances 5 are disposed within a chamber 6 which is provided under the cooking plate 3. The chamber 6 contains a certain quantity of diathermic oil which laps on the lower side of the cooking plate 3.

The chamber 6 is sealed and is provided with pipe connections 7 for the joining of pipes through which the diathermic oil is fed and drained off.

The front side of the cooking plane shows plate controls that are included in a front panel 8 and comprise a control thermostat and the operation lights.

As can be seen, the so-described heating structure permits the cooking plate 3 to be heated uniformly on its whole surface since the electric resistances heat the diathermic oil in the chamber 6 so that the heated diathermic oil laps on the lower side of the cooking plate.

As described, the structure according to the present invention is very advantageous because it reduces the consumption of electric energy of about a half, the wished temperature is reached quickly and it is possible to reach a perfectly balanced, homogeneous temperature that avoids even a delicate food such as vegetables, fish, white meat, beef, etc., to be burnt, there being in any case the possibility of selecting the wished cooking temperature.

The particular shape of the cooking plate according to the present invention is the result of several tests and is to avoid any breakage in the soldering points during the expansion phase of the diathermic oil.

A skilled artisan of the field in question may provide any modifications and changes to the so-described cooking plane in order to obtain solutions that are to be considered as included in the scope of protection of the present invention as further described in its peculiarities in the following claims.

## Claims

1. Cooking plane for aliments comprising both a heated cooking plate (3) on which the food to be cooked is arranged and heating electric resistances (5) which are placed in a chamber (6) filled with a diathermic fluid, **characterized in that** the said cooking plate (3) is disposed completely over at least a chamber (6) in which the said electric resistances (5) and a the said diathermic fluid are inserted, the diathermic fluid fills the chamber (6) completely and laps on the whole lower side of the cooking plate (3), and that the said cooking plate (3) is heated by the said fluid which diffuses and propagates homogeneously the heat generated by the electric resistances (5).

2. Cooking plane for aliments as claimed in claim the foregoing claim, **characterized in that** the said fluid is a diathermic oil or a similar appropriate fluid for the same purpose.

3. Cooking plane for aliments as claimed in the foregoing claims, **characterized in that** the said cooking plate (3) is contained in a projecting shoulder (4) which surrounds the cooking plate (3) but the front side of the cooking plate (3) remains free to permit the aliments to be put on the cooking plate and taken out once they are cooked.

4. Cooking plane for aliments as claimed in the foregoing claims, **characterized in that** the peculiarity of the present cooking plane (3) consists in a particular kind of heating to reach the working temperature which takes advantage of conventional electric resistances (5) made of stainless steel or the like, which resistances do not propagate heat to the lower side of the cooking plate directly but they are immersed in a bath of fluid which in the specific case is a diathermic oil.

5. Cooking plane for aliments as claimed in the foregoing claims, **characterized in that** the electric resistances (5) are disposed in the inside of at least a chamber (6) which is placed under the cooking plate (3).

6. Cooking plane for aliments as claimed in the foregoing claims, **characterized in that** the said chamber (6) contains a certain quantity of diathermic oil which laps on the lower side of the cooking plate (3).

7. Cooking plane for aliments as claimed in the foregoing claims, **characterized in that** the said chamber (6) is a sealed chamber and is provided with pipe connections (7) for the joining of pipes through which the diathermic oil is fed and drained off.

## Patentansprüche

1. Kochebene für Lebensmittel mit einer geheizten Kochplatte (3), auf der das zu kochende Nahrungsmittel angeordnet wird, und elektrischen Heizwiderständen (5), die in einer mit einem diathermischen Fluid gefüllten Kammer (6) verlegt sind, **dadurch gekennzeichnet, dass** sich die Kochplatte (3) vollständig über mindestens einer Kammer (6) befindet, in der die elektrischen Widerstände (5) und das diathermische Fluid eingeführt sind, wobei das diathermische Fluid die Kammer (6) vollständig füllt und die gesamte Unterseite der Kochplatte (3) überlappt, und dass die Kochplatte (3) durch das Fluid geheizt wird, welches die durch die elektrischen Widerstände (5) erzeugte Wärme homogen verteilt und ausbreitet.

2. Kochebene für Lebensmittel nach Anspruch 1, **dadurch gekennzeichnet, dass** das Fluid ein diathermisches Öl oder ein für denselben Zweck geeignetes ähnliches Fluid ist.

3. Kochebene für Lebensmittel nach einem der vorhergehenden Ansprüche, **dadurch gekennzeichnet, dass** die Kochplatte (3) in einer vorstehenden Schulter (4) enthalten ist, welche die Kochplatte (3) umgibt, wobei aber die Vorderseite der Kochplatte (3) frei bleibt, um zu ermöglichen, dass die Lebensmittel auf die Kochplatte gelegt werden und herausgenommen werden, wenn sie gekocht sind.

4. Kochebene für Lebensmittel nach einem der vorhergehenden Ansprüche, **dadurch gekennzeichnet, dass** die Besonderheit der vorliegenden Kochebene bzw. Kochplatte (3) in einer besonderen Art des Heizens zum Erreichen der Arbeitstemperatur liegt, wobei herkömmliche elektrische Widerstände (5) aus rostfreiem Stahl oder dergleichen genutzt werden, welche keine Wärme zur Unterseite der Kochplatte hin direkt ausbreiten, sondern in ein Fluidbad eingetaucht sind, welches in dem speziellen Fall ein diathermisches Öl ist.

5. Kochebene für Lebensmittel nach einem der vorhergehenden Ansprüche, **dadurch gekennzeichnet, dass** sich die elektrischen Widerstände (5) an der Innenseite mindestens einer Kammer (6) befinden, die unter der Kochplatte (3) angeordnet ist.

6. Kochebene für Lebensmittel nach einem der vorhergehenden Ansprüche, **dadurch gekennzeichnet, dass** die Kammer (6) eine gewisse Menge an diathermischem Öl enthält, das die Unterseite der Kochplatte (3) überlappt.

7. Kochebene für Lebensmittel nach einem der vorhergehenden Ansprüche, **dadurch gekennzeichnet, dass** die Kammer (6) eine abgedichtete Kammer ist und mit Rohranschlüssen (7) zum Verbinden mit Rohren bzw. Schläuchen ausgestattet ist, durch die das diathermische Öl zugeführt und abgeführt wird.

## Revendications

1. Plan de cuisson pour aliments comprenant à la fois une plaque de cuisson (3) sur laquelle les aliments devant être cuits sont disposés et des résistances électriques chauffantes (5) qui sont placées dans une chambre (6) remplie d'un fluide diathermique, **caractérisé en ce que** ladite plaque de cuisson (3) est disposée complètement sur au moins une chambre (6) dans laquelle lesdites résistances électriques (5) et ledit fluide diathermique sont insérés, le fluide diathermique remplit complètement la chambre (6) et recouvre la totalité du côté inférieur de la plaque de cuisson (3) et **en ce que** ladite plaque de cuisson (3) est chauffée par ledit fluide qui diffuse et propage de manière homogène la chaleur générée par les résistances électriques (5).

2. Plan de cuisson pour aliments selon la revendication précédente, **caractérisé en ce que** ledit fluide est une huile diathermique ou un fluide similaire approprié pour le même objet.

3. Plan de cuisson pour aliments selon les revendications précédentes, **caractérisé en ce que** ladite plaque de cuisson (3) est comprise dans un épaulement en saillie (4) qui entoure la plaque de cuisson (3) mais le côté avant de la plaque de cuisson (3) reste libre pour permettre aux aliments d'être placés sur la plaque de cuisson et retirés une fois qu'ils sont cuits.

4. Plan de cuisson pour aliments selon les revendications précédentes, **caractérisé en ce que** la particularité du présent plan de cuisson (3) consiste en une sorte particulière de chauffage pour atteindre la température de service qui tire profit des résistances électriques chauffantes (5) composées d'acier inoxydable ou équivalent, lesquelles résistances ne propagent pas la chaleur vers le côté inférieur de la plaque de cuisson directement mais sont immergées dans un bain de fluide qui, dans ce cas spécifique, est une huile diathermique.

5. Plan de cuisson pour aliments selon les revendications précédentes, **caractérisé en ce que** les résistances électriques (5) sont disposées à l'intérieur d'au moins une chambre (6) qui est placée sous la plaque de cuisson (3).

6. Plan de cuisson pour aliments selon les revendications précédentes, **caractérisé en ce que** ladite chambre (6) comprend une certaine quantité d'huile diathermique qui recouvre le côté inférieur de la plaque de cuisson (3).

7. Plan de cuisson pour aliments selon les revendications précédentes, **caractérisé en ce que** ladite chambre (6) est une chambre étanche et est munie de raccords de tuyauterie (7) pour la jonction de tuyaux à travers lesquels l'huile diathermique est alimentée et évacuée.
